(19)

Europäisches
Patentamt
European
Patent Office
Office européen
des brevets

(11) **EP 1 592 261 B1**

(12) **EUROPEAN PATENT SPECIFICATION**

(45) Date of publication and mention
of the grant of the patent:
**11.08.2010   Bulletin 2010/32**

(51) Int Cl.:
***H04N 9/64*** *(2006.01)*

(21) Application number: **04256499.7**

(22) Date of filing: **21.10.2004**

(54) **Multiple color transformation apparatus and method for image**

Vorrichtung und Verfahren zur  Bildmehrfarbtransformation

Appareil et procédé et  de transformation de couleurs multiples d'image

(84) Designated Contracting States:
**DE FR GB**

(30) Priority:   **30.04.2004   KR 2004030651**

(43) Date of publication of application:
**02.11.2005   Bulletin 2005/44**

(73) Proprietor: **SAMSUNG ELECTRONICS CO., LTD.
Suwon-city,
Gyeonggi-do (KR)**

(72) Inventors:
  • **Choe, Wonhee, 204-1002 Daewoo 2-cha Apt.
    Gyeongju-si, Gyeongsangbuk-do (KR)**
  • **Ok, Hyunwook, c/o Samsung Adv. Inst. of. Techn.
    Yongin-si, Gyeonggi-do (KR)**
  • **Lee, Seongdeok
    Suwon-si, Gyeonggi-do (KR)**

  • **Kim, Changyeong
    Yongin-si, Gyeonggi-do (KR)**

(74) Representative: **Greene, Simon Kenneth
    Elkington and Fife LLP
    Prospect House
    8 Pembroke Road
    Sevenoaks
    Kent TN13 1XR (GB)**

(56) References cited:
  **EP-A- 0 613 309       US-A1- 2003 025 835
  US-B1- 6 392 713**

  • **PATENT ABSTRACTS OF JAPAN vol. 0186, no.
    67 (E-1645), 15 December 1994 (1994-12-15) & JP
    6 261332 A (NIPPON HOSO KYOKAI <NHK>), 16
    September 1994 (1994-09-16)**

**Description**

The present invention relates to processing of an image to display the image in multi-primary colors, and more particularly, to a multiple color transformation apparatus and method for an image.

In general, an image signal is processed in a 3-dimensional color space where red (R), green (G), and blue (B) colors are representative. Also, an image corresponding to the image signal is displayed via a display device using three color light sources. It is possible for the image signal to be displayed using R, G, and B chrominance components due to the fact that R, G, and B colors are primary colors that can be used for constituting all kinds of colors.

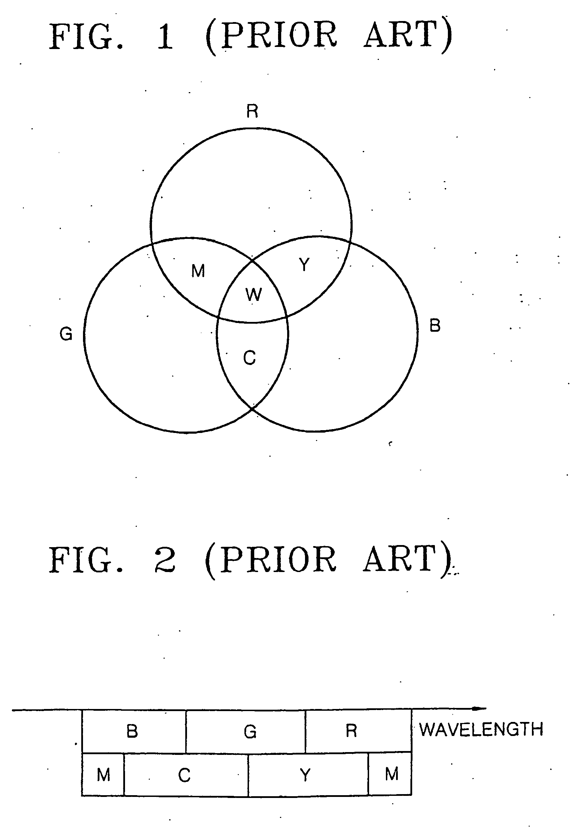

FIG. 1 is a view for showing the relationships among primary colors. Referring to FIG. 1, all kinds of colors may be represented with combinations of three primary colors R, G, and B. For example, a combination of R and G makes yellow (Y), a combination of G and B makes cyan (C), and a combination of B and R makes magenta (M). Also, a combination of three primary colors R, G, and B forms white (W).

FIG. 2 is a view for showing the relationships among wavelengths of R, G, B, C, M, and Y chrominance components. Referring to FIG. 2, an R chrominance component has the longest wavelength, while a B chrominance component has the shortest wavelength. A wavelength of a Y chrominance component is about half the sum of wavelengths of G and R chrominance components, a wavelength of a C chrominance component is about half the sum of the wavelengths of G and B chrominance components, and a wavelength of an M chrominance component is about half the sum of the wavelengths of B and R chrominance components. Therefore, a combination of two different primary chrominance components can result in obtaining C, M, and Y chrominance components.

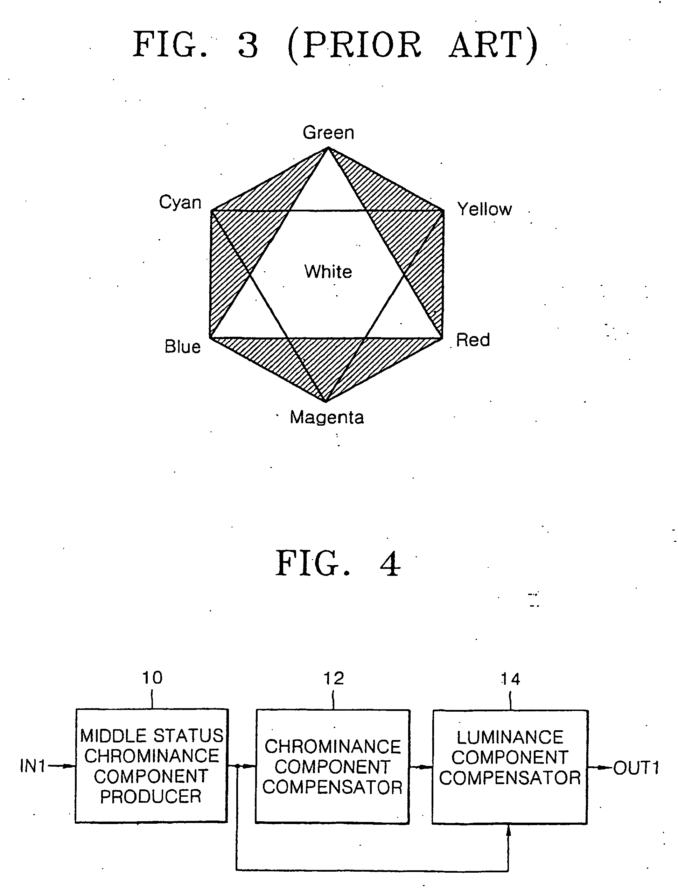

FIG. 3 is a view for showing chromaticity coordinates of R, G, B, C, M, and Y chrominance components. Referring to FIG. 3, a chromaticity coordinate system can be simplified by overlapping an RGB triangle having R, G, and B apexes with a CMY triangle having C, M, and Y apexes. In this case, all chromaticity coordinates within the RGB triangle can be expressed with combinations of R, G, and B chrominance components. Also, all chromaticity coordinates within the CMY triangle can be expressed with combinations of C, M, and Y chrominance components. However, chromaticity coordinates outside the RGB and CMY triangles cannot be expressed with combinations of chrominance components constituting their apexes. For example, chromaticity coordinates outside the RGB triangle (marked with slanted lines) cannot be expressed with only the R, G, and B chrominance components. As a result, a larger number of light sources must be used to express a wider color gamut. A plurality of conventional multiple color transformation methods of transforming a limited number of input chrominance components into a larger number of chrominance components are used to express a clearer and more realistic image.

One of the conventional multiple color transformation methods is disclosed in U.S. Pat. No. 6,633,302 applied by Olympus Optical Co., Ltd. In a case where the disclosed multiple color transformation method is applied to a five-or-more-primary-color system, the segmentation of a color space becomes very complicated. Thus, the disclosed multiple color transformation method has difficulty in being realized.

Another of the conventional multiple color transformation methods is disclosed in WO 02/101644 applied by GENOA COLOR TECHNOLOGIES LTD. The disclosed multiple color transformation method requires a complicated process of calculating a lookup table (LUT).

Moreover, maximum color saturation and a maximum luminance value, which can be expressed by an image display device, vary according to a used conventional multiple color transformation method. As a result, the quality of an output image may be deteriorated.

Another color transformatin method is described in JP6-261332. In embodiments, a three component rgb input is transformed to produce six output components. A negative clip check checks for negative values and in the event of a negative value corrects the negative value to zero and applies compensation to other components.

EP613 309 describes a further color detection and checking system which checks for illegal values of color coordinates and applies correction if they are detected.

According to an aspect of the present invention, there is provided a multiple color transformation apparatus according to claim 1.

The present invention provides a multiple color transformation apparatus for an image to minimize deterioration of image quality and simply transforming a limited number of input chrominance components into a larger number of chrominance components.

The present invention provides a multiple color transformation method for an image to minimize deterioration of image quality and simply transforming a limited number of input chrominance components into a larger number of chrominance components.

Alternatively, the multiple color transformation apparatus may include: a middle status chrominance component producer which linearly combines first through $M^{th}$ (where M is a positive integer larger than or equal to "3") input chrominance components for representing a color of each of pixels of the image to produce first through $N^{th}$ (where N is a positive integer larger than or equal to "4" and is larger than M) middle status chrominance components; and a luminance component compensator which compensates luminance levels of the first through $N^{th}$ middle status chrominance components by a difference between a luminance level of a single color to be represented by the first through $N^{th}$ middle status chrominance components and a second predetermined level.

According to another aspect of the present invention, there is provided a multiple color transformation method according to claim 18.

The above and other features and advantages of the present invention will become more apparent by describing in detail exemplary embodiments thereof with reference to the attached drawings in which:

FIG. 1 is a view for showing the relationships among primary colors;
FIG. 2 is a view for showing the relationships among wavelengths of R, G, B, C, M, and Y chrominance components;
FIG. 3 is a view for showing chromaticity coordinates of R, G, B, C, M, and Y chrominance components;
FIG. 4 is a block diagram of a multiple color transformation apparatus for an image, according to an embodiment of the present invention;
FIG. 5 is a flowchart for explaining a multiple color transformation method for an image, according to an embodiment of the present invention;
FIG. 6 is a block diagram of an embodiment of the present invention of a middle status chrominance component producer of FIG. 4;
FIG. 7 is a graph for showing an exemplary relationship between a scaling ratio and grayness;
FIG. 8 is a block diagram of another embodiment of the present invention of the middle status chrominance component producer of FIG. 4;
FIG. 9 is a block diagram of still another embodiment of the present invention of the middle status chrominance component producer of FIG. 4;
FIG. 10 is a block diagram of an embodiment of the present invention of a chrominance component compensator of FIG. 4; and
FIG. 11 is a block diagram of an embodiment of the present invention of a luminance component compensator of FIG. 4.

Hereinafter, the structure and operation of a multiple color transformation apparatus for an image and a multiple color transformation method, according to the present invention, will be described in detail with reference to the attached drawings.

FIG. 4 is a block diagram of a multiple color transformation apparatus for an image, according to an embodiment of the present invention. Referring to FIG. 4, the multiple color transformation apparatus includes a middle status chrominance component producer 10, a chrominance component compensator 12, and a luminance component compensator 14.

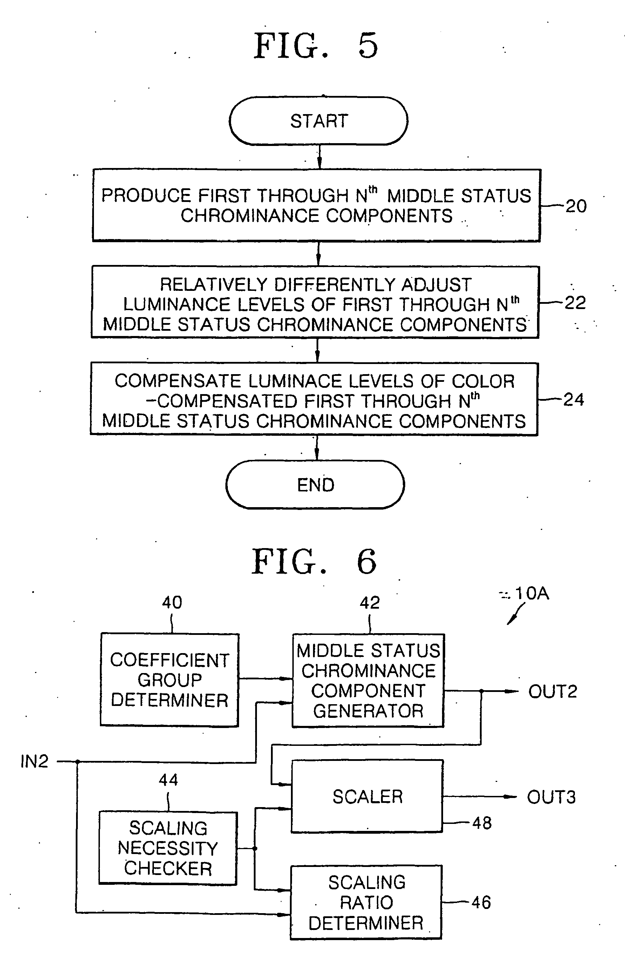

FIG. 5 is a flowchart for explaining a multiple color transformation method for an image, according to an embodiment of the present invention. The multiple color transformation method includes steps 20 and 22 of producing and compensating first through $N^{th}$ middle status chrominance components and step 24 of compensating luminance components of the color-compensated first through $N^{th}$ middle status chrominance components.

In step 20, the middle status chrominance component producer 10 of FIG. 4 receives first through $M^{th}$ input chrominance components for representing a color of each of pixels of an image, via an input node IN1, linearly combines the first through $M^{th}$ input chrominance components, and outputs the linear combination results as first through $N^{th}$ middle status chrominance components to the chrominance component compensator 12. Here, **M** may be a positive integer larger than "3", and N may be a positive integer larger than "4" and may be larger than **M**.

For example, in a case where the first through $M^{th}$ input chrominance components are R, G, and B chrominance components and the first through $N^{th}$ middle status chrominance components are R, G, B, C, M, and Y chrominance components, the middle status chrominance component producer 10 may produce fourth through sixth middle status chrominance components $C_1$, $M_1$, and $Y_1$ from first through third input chrominance components $R_i$, $G_i$, and $B_i$ using Equation 1:

$$C_1 = \frac{1}{2}(G_i + B_i)$$

$$M_1 = \frac{1}{2}(R_i + B_i) \qquad\qquad ...(1)$$

$$Y_1 = \frac{1}{2}(R_i + G_i)$$

Equation 1 may be obtained from the relationships among chrominance components shown in FIGS. 1 and 2.

FIG. 6 is a block diagram of an embodiment 10A of the present invention of the middle status chrominance component producer 10 of FIG. 4, including a coefficient group determiner 40, a middle status chrominance component generator 42, a scaling necessity checker 44, a scaling ratio determiner 46, and a scaler 48.

According to an aspect of the present invention, differently from FIG. 6, the middle status chrominance component producer 10 may included only the coefficient group determiner 40 and the middle status chrominance component generator 42.

In this case, the coefficient group determiner 40 determines at least one coefficient group and outputs the determined coefficient group to the middle status chrominance component generator 42. Here, the middle status chrominance component generator 42 generates first through $N^{th}$ middle status chrominance components using first through $M^{th}$ input chrominance components, which are input via an input node IN2, and the coefficient group determined by the coefficient group determiner 40 and outputs the generated first through $N^{th}$ middle status chrominance components via an output node OUT2.

For example, as previously described, when the first through $M^{th}$ input chrominance components are $R_i$, $G_i$, and $B_i$ chrominance components and the first through $N^{th}$ middle status chrominance components are $R_1$, $G_1$, $B_1$, $C_1$, $M_1$, and $Y_1$ chrominance components, first through sixth middle status chrominance components can be obtained using Equation 2:

$$\begin{bmatrix} R_1 \\ G_1 \\ B_1 \end{bmatrix} = \begin{bmatrix} a1 & b1 & c1 \\ d1 & e1 & f1 \\ g1 & h1 & i1 \end{bmatrix} \begin{bmatrix} R_i \\ G_i \\ B_i \end{bmatrix}, \begin{bmatrix} C_1 \\ M_1 \\ Y_1 \end{bmatrix} = \begin{bmatrix} a2 & b2 & c2 \\ d2 & e2 & f2 \\ g2 & h2 & i2 \end{bmatrix} \begin{bmatrix} R_i \\ G_i \\ B_i \end{bmatrix} \qquad ...(2)$$

wherein

$$\begin{bmatrix} a1 & b1 & c1 \\ d1 & e1 & f1 \\ g1 & h1 & i1 \end{bmatrix}$$

denotes a first coefficient group, and

$$\begin{bmatrix} a2\,b2\,c2 \\ d2\,e2\,f2 \\ g2\,h2\,i2 \end{bmatrix}$$

denotes a second coefficient group.

If an image display device (not shown) does not have a process capability, (a1, b1, c1)=(1, 0, 0), (d1, e1, f1)= (0, 1, 0), (g1, h1, i1)=(0, 0, 1), (a2, b2, c2)=(-1, 1, 1), (d2, e2, f2)=(1, -1, 1), and (g2, h2, i2)=(1, 1, -1). In a case where the process capability is not considered, (a2, b2, c2)=(0, 1/2, 1/2), (d1, e1, f1)=(1/2, 0, 1/2), and (g1, h1, i1)=(1/2, 1/2, 0). Thus, the middle status chrominance component producer 10 according to the present invention may determine the first and second coefficient groups in consideration of the process capability.

According to another aspect of the present invention, as shown in FIG. 6, the middle status chrominance component producer 10 may further include the scaling necessity checker 44, the scaling ratio determiner 46, and the scaler 48.

The scaling necessity checker 44 of FIG. 6 checks whether at least one of the first through $N^{th}$ middle status chrominance components needs to be scaled and outputs the checked result to the scaling ratio determiner 46 and the scaler 48. Here, the need for scaling the at least one of the first through $N^{th}$ middle status chrominance components indicates that one of the first through $N^{th}$ middle status chrominance components has a undesired luminance level or the first through $N^{th}$ middle status chrominance components have unsuitable color saturations.

The scaling ratio determiner 46 determines a scaling ration in response to the check result of the scaling necessity checker 44 and outputs the determined scaling ratio to the scaler 48. For example, if it is perceived through the check result of the scaling necessity checker 44 that the at least one of the first through $N^{th}$ middle status chrominance components needs to be scaled, the scaling ratio determiner 46 determines the scaling ratio. According to the present invention, the scaling ratio determiner 46 determines the scaling ratio so as to be complementary to grayness of the first through $M^{th}$ input chrominance components input via the input node IN2. For example, the scaling ratio determiner 46 can determine the scaling ratio using Equation 3:

$$n' = 1 - p \times m \qquad \ldots(3)$$

wherein **n'** denotes the scaling ratio, **p** denotes a predetermined constant, $0 \langle p \langle 1$, and **m** denotes grayness which can be expressed as in Equation 4.

$$m = \frac{\max(X1_i, X2_i, \ldots XM_i) - \min(X1_i, X2_i, \ldots XM_i)}{\max(X1_i, X2_i, \ldots XM_i)} \qquad \ldots(4)$$

wherein $\mathbf{max(X1_i, X2_i, \ldots XM_i)}$ denotes maximum values of luminance levels ($X1_i$, $X2_i$, ..., and $XM_i$) of the first through $M^{th}$ input chrominance components, and $\min(X1_i, X2_i, \ldots XM_i)$ denotes minimum values of the luminance levels ($X1_i$, $X2_i$, ..., and $XM_i$) of the first through $M^{th}$ input chrominance components

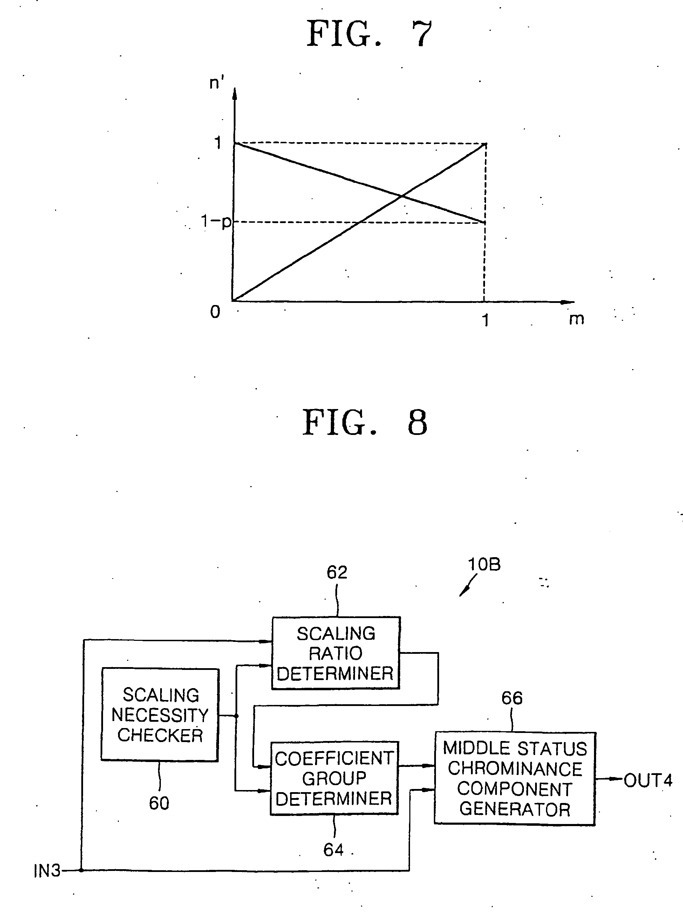

FIG. 7 is a graph for showing an exemplary relationship between a scaling ratio and grayness. Here, the horizontal axis denotes grayness **m,** and the vertical axis denotes a scaling ratio **n'**.

As shown in FIG. 7, in a case where the grayness **m** increases within a range between "0" and "1", the scaling ratio **n'** varies within a range between "1" and "1-p". For example, when p=0.5, the scaling ratio **n'** linearly decreases from "1" to "05."

If it is perceived through the check result of the scaling necessity checker 44 that the at least one of the first through $N^{th}$ middle status chrominance components needs to be scaled, for example, that the at least one of the first through $N^{th}$ middle status chrominance components has a undesired luminance level, the scaler 48 of FIG. 6 scales the at least one of the first through $N^{th}$ middle status chrominance components using the scaling ratio determined by the scaling determiner 46 and outputs the scaled result via an output node OUT3.

For example, when color saturations of the first through $N^{th}$ middle status chrominance components increase with increases in color saturations of $M+1^{th}$ through $N^{th}$ middle status chrominance components, the scaler 48 scales the first through $N^{th}$ middle status chrominance components using the scaling ratio that is complementary to grayness as shown in FIG. 7. This may result in reducing color saturations of first through $M^{th}$ neutral color signals.

When a color (hereinafter referred to as a single color) to be represented by the first through $N^{th}$ middle status chrominance components are achromatic, the scaler 48 of FIG. 6 scales all of the first through $N^{th}$ middle status chrominance components, for example, R, G, B, C, M, and Y middle status chrominance components. When the single color to be represented by the first through $N^{th}$ middle status chrominance components are chromatic, the scaler 48 scales only corresponding middle status chrominance components of the first through $N^{th}$ middle status chrominance components, for example, C, M, and Y middle status chrominance components.

FIG. 8 is a block diagram of another embodiment 10B of the present invention of the middle status chrominance component producer 10 of FIG. 4, including a scaling necessity checker 60, a scaling ratio determiner 62, a coefficient group determiner 64, and a middle status chrominance component generator 66.

The scaling necessity checker 60 of FIG. 8 checks whether at least one of first through $N^{th}$ middle status chrominance components needs to be scaled and outputs the check result to the scaling ratio determiner 62 and the coefficient group determiner 64.

Here, if it is perceived through the check result of the scaling necessity checker 60 that the at least one of the first through $N^{th}$ middle status chrominance components needs to be scaled, the scaling ratio determiner 62 determines a scaling ratio using first through $M^{th}$ chrominance components, which are input via an input node IN3, for example, as in Equation 3 above, and outputs the determined scaling ratio to the coefficient group determiner 64. If it is perceived through the check result of the scaling necessity checker 60 that the at least one of the first through $N^{th}$ middle status chrominance components needs to be scaled, the coefficient group determiner 64 determines at least one coefficient group in consideration of the scaling ratio input from the scaling ratio determiner 62 and outputs the determined at least one coefficient group to the middle status chrominance component generator 66.

If it is perceived through the check result of the scaling necessity checker 60 that the at least one of the first through $N^{th}$ middle status chrominance components needs to be scaled, for example, that at least one of luminance levels of the first through $N^{th}$ middle status chrominance components is not a desired level, the coefficient group determiner 64 determines at least one coefficient group using the scaling ratio input from the scaling ratio determiner 46. For example, when color saturations of the first through $N^{th}$ middle status chrominance components increase with increases in color saturations of $M+1^{th}$ through $N^{th}$ middle status chrominance components, the coefficient group determiner 64 determines at least one coefficient group in consideration of the scaling ratio so as to reduce color saturations of first through $M^{th}$ neutral color signals.

When a single color to be represented by the first through $N^{th}$ middle status chrominance components is achromatic, the coefficient group determiner 64 of FIG. 8 determines a coefficient group so as to scale all of first through. $N^{th}$ middle status chrominance components, which are to be generated by the middle status chrominance component generator 66, for example, R, G, B, C, M, and Y middle status chrominance components. When the single color to be represented by the first through $N^{th}$ middle status chrominance components is chromatic, the coefficient group determiner 64 determines a coefficient group so as to scale corresponding middle status chrominance components of the first through $N^{th}$ middle status chrominance components, for example, C, M, and Y middle status chrominance components.

The middle status chrominance component generator 66 of FIG. 8 generates the first through $N^{th}$ middle status chrominance components using the first through $M^{th}$ input chrominance components input via the input node IN3 and the coefficient group determined by the coefficient group determiner 64 and outputs the generated first through $N^{th}$ middle status chrominance components via an output node OUT4.

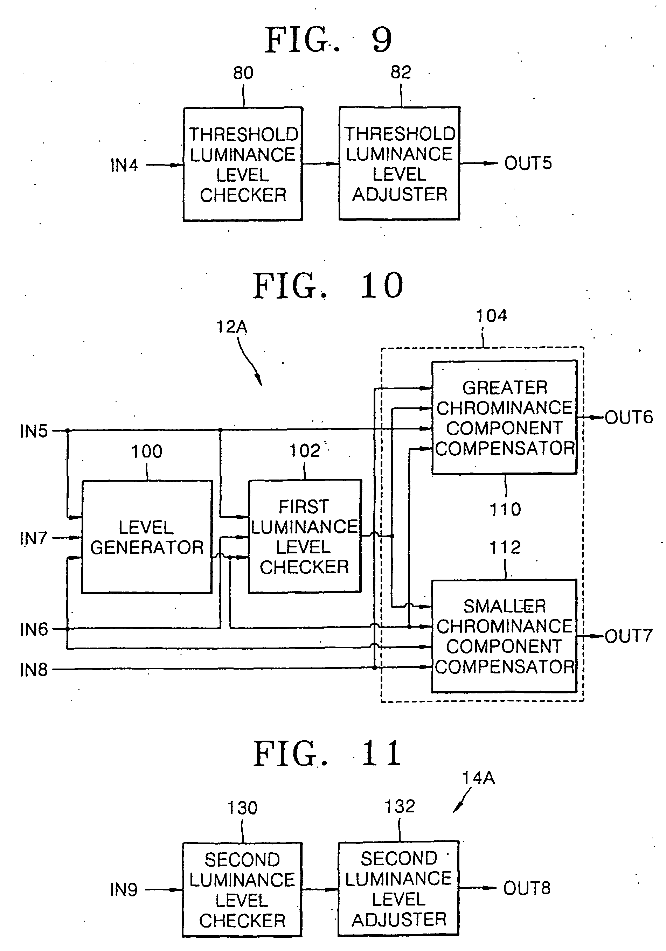

FIG. 9 is a block diagram of still another embodiment of the present invention of the middle status chrominance component producer 10 of FIG. 4, including a threshold luminance level checker 80 and a threshold luminance level adjuster 82.

According to another aspect of the present invention, the middle status chrominance component producer 10A of FIG. 6 or 10B of FIG. 8 may further include the threshold luminance level checker 80 and the threshold luminance level adjuster 82.

The threshold luminance level checker 80 checks whether at least one of luminance levels of scaled first through $N^{th}$ middle status chrominance components input via an input node IN4 is out of a substantial threshold luminance level range and outputs the check result to the threshold luminance level adjuster 82. Here, the substantial threshold luminance level range refers to a luminance level range which can be substantially represented by a display device. For example, scaled luminance levels of the first through $N^{th}$ middle status chrominance components may be negative luminance levels. In this case, the negative luminance levels refer not to luminance levels to be substantially represented by the display device but to theoretical luminance levels and thus exceed the threshold luminance level range.

If it is perceived through the check result of the threshold luminance level checker 80 that the at least one of the luminance levels of the first through $N^{th}$ middle status chrominance components is out of the substantial threshold luminance level range, the threshold luminance level adjuster 82 adjusts the at least one luminance level so as to be within the threshold luminance level range and outputs the adjustment result to the chrominance component compensator 12 via an output node OUT5.

For example, the threshold luminance level checker 80 and the threshold luminance level adjuster 82 of FIG. 9 serve to express color areas which correspond to portions marked with slanted lines of FIG. 3 and which cannot be represented with three primary colors.

After step 20, in step 22, the chrominance component compensator 12 of FIG. 4 relatively differently adjusts the luminance levels of the first through $N^{th}$ middle status chrominance components according to the degrees to which the first through $N^{th}$ middle status chrominance components input from the middle status chrominance component producer 10 contribute to expressing the single color and outputs the first through $N^{th}$ middle status chrominance components having the adjusted luminance levels as color-compensated first through $N^{th}$ middle status chrominance components.

FIG. 10 is a block diagram of an embodiment 12A of the present invention of the chrominance component compensator 12 of FIG. 4, including a level generator 100, a first luminance level checker 102, and a first luminance level adjuster 104.

According to an aspect of the present invention, differently from FIG. 10, the chrominance component compensator 12 may include only the first luminance level checker 102 and the first luminance level adjuster 104.

The first luminance level checker 102 checks whether a luminance level of a first contribution chrominance component input via an input node IN5 is lower than a first predetermined level and a luminance level of a single color input via an input node IN6 is higher than the first predetermined level and outputs the check results to the first luminance level adjuster 104. Here, the first contribution chrominance component refers to one of the first through $N^{th}$ middle status chrominance components which most greatly contributes to representing the single color. According to the present invention, the first predetermined level may be set to a maximum luminance level of the first contribution chrominance component.

The first luminance level adjuster 104 adjusts the luminance level of the first contribution chrominance component in response to the check results of the first luminance level checker 102, reflects the adjustment result to adjust luminance levels of remaining contribution chrominance components, and outputs the first through $N^{th}$ middle status chrominance components having the adjusted luminance levels as color-compensated first through $N^{th}$ middle status chrominance components. Here, the remaining contribution chrominance components mean middle status chrominance components which are obtained by excepting the first contribution chrominance component from the first through $N^{th}$ middle status chrominance components and which greatly contribute to representing the single color according to the order of second, third, ..., and $N^{th}$ contribution chrominance components. In other words, following the first contribution chrominance component, the second contribution chrominance component much contributes to representing the single color.

According to another aspect of the present invention, as shown in FIG. 10, the chrominance component compensator 12A may further include the level generator 100.

The level generator 100 generates the first predetermined level using the luminance level of the first contribution chrominance component input via the input node IN5, the luminance level of the single color input via the input node IN6, and a weight input via an input node IN7 and outputs the generated first predetermined level to the first luminance level checker 102 and the first luminance level adjuster 104. Here, the weight refers to a degree to which each of the first through $N^{th}$ middle status chrominance components contributes to representing the single color and may be input from an external source via the input node IN7 or may be obtained by the level generator 100 using the first through $N^{th}$ middle status chrominance components. For example, the level generator 100 can generate the first predetermined level using Equation 5:

$$X_{th} = \mathrm{Re}\,gion \frac{D_{Yx}}{D_{Yt}} \qquad \ldots(5)$$

wherein $X_{th}$ denotes the first predetermined level, **Region** denotes the weight, $D_{Yx}$ denotes the luminance level of the first contribution chrominance component, and $D_{Yt}$ denotes the luminance level of the single color.

The first luminance level adjuster 104 of FIG. 10 may include a greater chrominance component compensator 110 and a smaller chrominance component compensator 112.

If the first luminance level checker 102 checks that the luminance level of the first contribution chrominance component input via the input node IN5 is lower than the first predetermined level and the luminance level of the single color input via the input node IN6 is higher than the first predetermined level, the greater chrominance component compensator 110 increases the luminance level of the first contribution chrominance component so as to be equal to the first predetermined level and reduces luminance levels of remaining contribution chrominance components input via an input node IN8 by the increase amount of the luminance level of the first contribution chrominance component. The first and remaining contribution chrominance components having the luminance levels adjusted by the greater chrominance component compensator 110 are output via an output node OUT6.

For example, when the luminance level of the first contribution chrominance component is lower than the first predetermined level and the luminance level of the single color is higher than the first predetermined level, the greater chrominance component compensator 110 may adjust the luminance levels of the first and remaining contribution chrominance components using Equation 6:

$$x2 = x1 + (\max - x1)\,\mathrm{Re}\,gion$$

$$y2 = \frac{y1 - \max \times x_{th} \times \mathrm{Re}\,gion}{1 - x_{th} \times \mathrm{Re}\,gion} \qquad \ldots(6)$$

wherein **x2** denotes the adjusted luminance level of the first contribution chrominance component, **x1** denotes the unadjusted luminance level of the first contribution chrominance component, **y2** denotes the adjusted luminance levels of the remaining contribution chrominance components, **y1** denotes the unadjusted luminance levels of the remaining contribution chrominance components, and **max** denotes a maximum luminance level each middle status chrominance component may have, for example, "255".

If it is perceived through the check result of the first luminance level checker 102 that the luminance level of the first contribution chrominance component input via the input node IN5 is lower than the first predetermined level and the luminance level of the single color input via the input node IN6 is lower than or equal to the first predetermined level, the smaller chrominance component compensator 112 increases or reduces the luminance level of the first contribution chrominance component so as to be equal to the luminance level of the single color, and reduces or increases the luminance levels of the remaining contribution chrominance components input via the input node IN8 by the increment or reduction amount of the luminance level of the first contribution chrominance component.

For example, when the luminance level of the first contribution chrominance component is lower than the first predetermined level and the luminance level of the single color is lower than or equal to the first predetermined level, the smaller chrominance component compensator 112 operates as follows. In other words, the smaller chrominance component compensator 112 increases the luminance level of the first contribution chrominance component so as to be equal to the luminance level of the single color and reduces the luminance levels of the remaining contribution chrominance components by or in proportion to the increase amount of the luminance level of the first contribution chrominance component. Alternatively, the smaller chrominance component compensator 112 may reduce the luminance level of the first contribution chrominance component so as to be equal to the luminance level of the single color and increases the luminance levels of the remaining contribution chrominance components by or in proportion to the reduction amount of the luminance level of the first contribution chrominance component.

The first and remaining contribution chrominance components having the luminance levels adjusted by the smaller chrominance component compensator 112 are output via an output node OUT7.

For example, when the luminance level of the first contribution chrominance component is lower than the first predetermined level and the luminance level of the single color is lower than or equal to the first predetermined level, the smaller chrominance component compensator 112 adjusts the luminance levels of the first and remaining contribution chrominance components using Equation 7:

$$x2 = \frac{x1 + x1 \times (1 - x_{th}) \times \mathrm{Re}\,gion}{x_{th}} \qquad \ldots(7)$$

$$y2 = y1 - x_{th} \times x_2 \times \mathrm{Re}\,gion$$

According to the present invention, the first luminance level adjuster 104 of FIG. 10 adjusts the luminance levels of the remaining contribution luminance levels according to priority of the degrees to which the remaining contribution chrominance components contribute to representing the single color. For example, the greater chrominance component compensator 110 reduces the luminance levels of the remaining contribution chrominance components by the increase amount of the luminance level of the first contribution chrominance component, according to the order of the second, third, ..., and Nth contribution chrominance components. The smaller chrominance component compensator 112 reduces or increases the luminance levels of the remaining contribution chrominance components by the increment or reduction amount of the luminance level of the first contribution chrominance component according to the order of the second, third, ..., and Nth contribution chrominance components.

In a case where the chrominance component compensator 12 of FIG. 4 compensates the first through Nth middle status chrominance components, the color saturations of the first through Nth middle status chrominance components become maximized, which may contribute to maximizing color gamut.

Differently from FIG. 4, the multiple color transformation apparatus for the image, according to the present invention, may include only the middle status chrominance component producer 10 and the chrominance component compensator 12. Alternatively, as shown in FIG. 4, the multiple color transformation apparatus for .the image may include the middle status chrominance component producer 10, the chrominance component compensator 12, and the luminance component compensator 14.

After step 22, in step 24, the luminance component compensator 14 of FIG. 4 compensates the luminance levels of the first through Nth middle status chrominance components color-compensated by a difference between the luminance level of the single color to be represented by the color-compensated first through Nth middle status chrominance components input from the chrominance component compensator 12 and a second predetermined level and outputs the compensation results via the output node OUT1. Here, the second predetermined level may be luminance level of a color, which are to represented by the first through Mth input chrominance components, or may a luminance level which is determined in advance and is desired by a user.

FIG. 11 is a block diagram of an embodiment 14A of the present invention of the luminance component compensator 14 of FIG. 4, including a second luminance level checker 130 and a second luminance level adjuster 132.

The second luminance level checker 130 checks whether a difference between the luminance level of the single color to be represented by the color-compensated first through Nth middle status chrominance components input from the chrominance component compensator 12 via an input node IN9 and the second predetermined level exists and outputs the check result to the second luminance level adjuster 132. For example, when it is assumed that the second predetermined level correspond to the luminance level of the color represented by the first through Mth input chrominance components, the second luminance level checker 130 checks whether the difference between the luminance level of the single color to be represented by the color-compensated first through Nth middle status chrominance components and the second predetermined level exists, using Equation 8:

$$dY\_x[i] = sx[i] - dy[i] \qquad \ldots(8)$$

wherein, **dy[i]** denotes luminance levels of color-compensated middle status chrominance components corresponding to an $i$th ($1 \leq i \leq M$) input chrominance component of the color-compensated first through Nth middle status chrominance components, **sx[i]** denotes a luminance level of the $i$th input chrominance component, and **dY_x[i]** denotes differences between the luminance level of the $i$th input chrominance component and the luminance levels of the color-compensated middle status chrominance components corresponding to the $i$th input chrominance component. For example, when the first input chrominance component is $R_i$ and the color-compensated first through Nth middle status chrominance components are $R_2$, $G_2$, $B_2$, $C_2$, $M_2$, and $Y_2$, **dy[i]** denotes luminance levels of $R_2$, $M_2$, and $Y_2$ corresponding to the first input chrominance component $R_i$.

If it is perceived through the check result of the second luminance level checker 130 that the difference between the luminance level of the single color to be represented by the color-compensated first through Nth middle status chrominance components and the second predetermined level exists, i.e., **dY_x** is not "0", the second luminance level adjuster 132 adjusts the luminance level of the single color to be represented by the color-compensated first through Nth middle status chrominance components and outputs the adjustment result via an output node OUT8. Here, the second luminance level adjuster 132 may adjust the luminance level of the single color to be represented by the color-compensated firs through Nth middle status chrominance components according to the degrees to which the color-compensated first through Nth middle status chrominance components contribute to representing the single color, i.e., the contribution priorities of the color-compensated first through Nth middle status chrominance components. For example, the second luminance level adjuster 132 adds a value, which is obtained using Equation 9, to the luminance levels of the color-compensated middle status chrominance components corresponding to the $i^{th}$ input chrominance component until **dY_x[i]** becomes "0".

$$dY\_x[i] \times \mathrm{Re}\, gion_j \qquad \ldots(9)$$

wherein **Region$_j$** denotes a degree to which a $j^{th}$ ($1 \leq j \leq N$) middle status chrominance component of the color-compensated first through $N^{th}$ middle status chrominance components contributes to representing the single color which is to be represented by the color-compensated first through $N^{th}$ middle status chrominance components.

Differently from FIG. 4, the multiple color transformation apparatus for the image, according to the present invention, may include only the middle status chrominance component producer 10 and the luminance component compensator 14.

In this case, the luminance component compensator 14 compensates the luminance levels of the first through $N^{th}$ middle status chrominance components by the difference between the luminance level of the single color to be represented by the first through $N^{th}$ middle status chrominance components input from the middle status chrominance component producer 10 and the second predetermined level and outputs the compensation result via the output node OUT1.

According to an aspect of the present invention, the second luminance level checker 130 of FIG. 11 checks whether the difference between the luminance level of the single color to be represented by the first through $N^{th}$ middle status chrominance components input from the middle status chrominance component producer 10 via the input node IN9 and the second predetermined level exists and outputs the check result to the second luminance level adjuster 132. For example, it is assumed that the second predetermined level corresponds to the luminance level of the color represented by the first through $M^{th}$ input chrominance components, the second luminance level checker 130 checks whether the difference between the luminance level of the single color to be represented by the first through $N^{th}$ middle status chrominance components and the second predetermined level exists, using Equation 10 according to the chrominance components:

$$dY\_x'[i] = sx[i] - dy'[i] \qquad \ldots(10)$$

wherein **dy'[i]** denotes the luminance levels of the middle status chrominance components corresponding to the $i^{th}$ input chrominance component of the first through $N^{th}$ middle status chrominance components, and **dY_x'[i]** denotes differences between the luminance level of the $i^{th}$ input chrominance component and luminance levels of the middle status chrominance components corresponding to the $i^{th}$ input chrominance component. For example, it is assumed that the first input chrominance component is referred to as $R_i$, **dy'[i]** denotes luminance levels of $R_1$, $M_1$, and $Y_1$ corresponding to the first input chrominance component $R_i$ of $R_1$, $G_1$, $B_1$, $C_1$, $M_1$, and $Y_1$.

If it is perceived through the check result of the second luminance level checker 130 that the difference between the luminance level of the single color to be represented by the first through $N^{th}$ middle status chrominance components and the second predetermined level exists, i.e., **dY_x'** is not "0", the second luminance level adjuster 132 adjusts the luminance level of the single color to be represented by the first through $N^{th}$ middle status chrominance components and outputs the adjustment result via the output node OUT8. Here, the second luminance level adjuster 132 adjusts the luminance level of the single color to be represented by the first through $N^{th}$ middle status chrominance components according to the degrees to which the first through $N^{th}$ middle status chrominance components contribute to representing the single color, i.e., the contribution priorities of the first through $N^{th}$ middle status chrominance components. For example, the second luminance level adjuster 132 adds a value, which is obtained using Equation 11, to the luminance levels of the middle status chrominance components corresponding to the $i^{th}$ input chrominance component until **dY_x'[i]** becomes "0".

$$dY\_x'[i] \times \mathrm{Re}\, gion_j' \qquad \ldots(11)$$

wherein **Region'$_j$** denotes the degree to which the $j^{th}$ middle status chrominance component of the first through $N^{th}$

middle status chrominance components contributes to representing the single color, which is to be represented by the first through $N^{th}$ middle status chrominance components. Here, $1 \leq j \leq N$.

As described above, a multiple color transformation apparatus and method for an image, according to the present invention, can transform M input chrominance components into N (> M) chrominance components so as to maximize a luminance and color saturation of an image display device. In particular, first through $M^{th}$ input chrominance components can be compensated using at least one of coefficient groups, which are determined by the middle status chrominance component producer 10A of FIG. 6 or 10B of FIG. 8 in consideration of a process capability. Thus, the deterioration of image quality or changes of a color caused by a process of the image display device can be minimized. Also, the luminance chrominance component compensator 14 can prevent loss of luminance resulting from multiple color transformation.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. A multiple color transformation apparatus for an image, comprising:

   a middle status chrominance component producer (10) which linearly combines first through $M^{th}$ (where M is a positive integer larger than or equal to "3") input chrominance components for representing a color of each of pixels of the image to produce first through $N^{th}$ (where N is a positive integer larger than or equal to "4" and is larger than M) middle status chrominance components; and
   a chrominance component compensator (12) which adjusts luminance levels of the first through $N^{th}$ middle status chrominance components;
   **characterised in that** the chrominance component compensator is arranged to adjust luminance levels of the first through $N^{th}$ middle status chrominance components according to degrees to which the first through $N^{th}$ middle status chrominance components contribute to representing a single color and outputs the first through $N^{th}$ middle status chrominance components having the adjusted luminance levels as color-compensated first through $N^{th}$ middle status chrominance components;
   wherein the chrominance component compensator (12) comprises:

   a first luminance level checker (102) which checks whether a luminance level of a first contribution chrominance component is lower than a first predetermined level and a luminance level of the single color is higher than the first predetermined level;
   a first luminance level adjuster (104) which adjusts the luminance level of the first contribution chrominance component in response to the check result of the first luminance level checker and reflects the adjustment result to adjust luminance levels of remaining contribution chrominance components,
   wherein the first contribution chrominance component corresponds to one of the first through $N^{th}$ middle status chrominance components which most greatly contributes to representing the single color and the remaining contribution chrominance components correspond to middle status chrominance components of the first through $N^{th}$ middle status chrominance components except the first contribution chrominance component.

2. The multiple color transformation apparatus of claim 1, wherein the middle status chrominance component producer (10) comprises:

   a coefficient group determiner (40) which determines at least one coefficient group; and
   a middle status chrominance component generator (42) which generates the first through $N^{th}$ middle status chrominance components from the first through $M^{th}$ input chrominance components using the determined at least one coefficient group.

3. The multiple color transformation apparatus of claim 1, wherein the middle status chrominance component producer (10) further comprises:

   a scaling necessity checker (44) which checks whether scaling needs to be performed;
   a scaling ratio determiner (46) which determines a scaling ratio in response to the check result of the scaling necessity checker; and

a scaler (48) which scales at least one of the first through $N^{th}$ middle status chrominance components using the determined scaling ratio in response to the check result of the scaling necessity checker.

4. The multiple color transformation apparatus of claim 3, wherein the scaling ratio determiner (46) determines the scaling ratio so as to be complementary to grayness of the first through $M^{th}$ input chrominance components in response to the check result of the scaling necessity checker.

5. The multiple color transformation apparatus of claim 3, wherein the middle status chrominance component producer (10) further comprises:

a threshold luminance level checker(80) which checks whether at least one of luminance levels of the scaled first through $N^{th}$ middle status chrominance components is out of a substantial threshold luminance level; and a threshold luminance level adjuster (82) which adjusts the luminance levels of the scaled first through $N^{th}$ middle status chrominance components, which are out of the substantial threshold luminance level, so as to be within a range of the threshold luminance level, in response to the check result of the threshold luminance level checker.

6. The multiple color transformation apparatus of claim 1, wherein the middle status chrominance component producer comprises:

a scaling necessity checker (60) which checks whether scaling needs to be performed; and a scaling ratio determiner (46) which determines a scaling ratio in response to the check result of the scaling necessity checker, wherein the coefficient group determiner (40) which determines the at least one coefficient group using the scaling ratio in response to the check result of the scaling necessity checker (60).

7. The multiple color transformation apparatus of any preceding claim, wherein the first predetermined level corresponds to a maximum luminance level of the first contribution chrominance component.

8. The multiple color transformation apparatus of any preceding claim, wherein the chrominance component compensator further comprises:

a level generator (100) which generates the first predetermined level using the luminance level of the first contribution chrominance component, the luminance of the single color, and a weight and outputs the generated first predetermined level to the first luminance level checker, wherein the weight denotes a degree to which each of the first through $N^{th}$ middle status chrominance components contributes to representing the single colour.

9. The multiple color transformation apparatus of claim 8, wherein the level generator (100) generates the first predetermined level using Equation below:

$$X_{th} = \text{Re}\,gion\,\frac{D_{Yx}}{D_{Yt}}$$

wherein $X_{th}$ denotes the first predetermined level, Region denotes the weight, $D_{Yx}$ denotes the luminance level of the first contribution chrominance component, and $D_{Yt}$ denotes the luminance level of the single color.

10. The multiple color transformation apparatus of claim 8, wherein the first luminance level adjuster (104) adjusts the luminance levels of the remaining contribution chrominance components according to priorities of degrees to which the remaining contribution chrominance components contribute to representing the single color.

11. The multiple color transformation apparatus of claim 6, 7, 8, 9 or 10, wherein the first luminance level adjuster (104) comprises:

a greater chrominance component compensator (110) which, if it is perceived through the check result of the first luminance level checker that the luminance level of the first contribution chrominance component is lower than the first predetermined level and the luminance level of the single color is higher than the first predetermined level, increases the luminance level of the first contribution chrominance component so as to be equal to the first predetermined level and reduces luminance levels of the remaining contribution chrominance components by the increase amount of the luminance level of the first contribution chrominance component; and

a smaller chrominance component compensator (112) which, if it is perceived through the check result of the first luminance level checker that the luminance level of the first contribution chrominance component is lower than the first predetermined level and the luminance level of the single color is lower than or equal to the first predetermined level, increases or reduces the luminance level of the first contribution chrominance component so as to be equal to the luminance level of the single color, and reduces or increases the luminance levels of the remaining contribution chrominance components by the increment or reduction amount of the luminance level of the first contribution chrominance component.

12. The multiple color transformation apparatus of claim 8, wherein when the luminance level of the first contribution chrominance component is lower than the first predetermined level and the luminance level of the single color is higher than the first predetermined level, the greater chrominance component compensator adjusts the luminance levels of the first and remaining contribution chrominance components using Equation below:

$$x2 = x1 + (\max - x1)\operatorname{Re}gion$$

$$y2 = \frac{y1 - \max \times x_{th} \times \operatorname{Re}gion}{1 - x_{th} \times \operatorname{Re}gion}$$

wherein x2 denotes the adjusted luminance level of the first contribution chrominance component, x1 denotes the unadjusted luminance level of the first contribution chrominance component, y2 denotes the adjusted luminance levels of the remaining contribution chrominance components, y1 denotes unadjusted luminance levels of the remaining contribution chrominance components, $x_{th}$ denotes the first predetermined level which is expressed as

$$x_{th} = \operatorname{Re}gion\frac{D_{Yx}}{D_{Yt}}$$

where $D_{Yx}$ denotes the luminance level of the first contribution chrominance level and $D_{Yt}$ denotes the luminance level of the single color, max denotes a maximum luminance level of each middle status chrominance component and Region denotes the weight that represents the degree to which each of the first through N$^{th}$ middle status chrominance components contributes to representing the single color.

13. The multiple color transformation apparatus of claim 10, wherein when the luminance level of the first contribution chrominance component is lower than the first predetermined level and the luminance level of the single color is lower than or equal to the first predetermined level, the smaller chrominance component compensator adjust the luminance levels of the first and remaining contribution chrominance components using Equation below:

$$x2 = \frac{x1 + x1 \times (1 - x_{th}) \times \operatorname{Re}gion}{x_{th}}$$

$$y2 = y1 - x_{th} \times x_2 \times \mathrm{Re}\,gion$$

wherein x2 denotes the adjusted luminance level of the first contribution chrominance component, x1 denotes the unadjusted luminance level of the first contribution chrominance component, y2 denotes the adjusted luminance levels of the remaining contribution chrominance components, y1 denotes the unadjusted luminance levels of the remaining contribution chrominance components, $x_{th}$ denotes the first predetermined level which is expressed as

$$x_{th} = \mathrm{Re}\,gion\,\frac{D_{Yx}}{D_{Yt}}\,,$$

where $D_{Yx}$ denotes the luminance level of the first contribution chrominance component and $D_{Yt}$ denotes the luminance level of the single color, and Region denotes the weight that represents the degree to which each of the first through N$^{th}$ middle status chrominance components contributes to representing the single color.

14. The multiple color transformation apparatus of any preceding claim, further comprising:

a luminance component compensator (14) which compensates the luminance levels of color-compensated the first through N$^{th}$ middle status chrominance components by a difference between the luminance level of the single color to be represented by the color-compensated first through N$^{th}$ middle status chrominance components and a second predetermined level.

15. The multiple color transformation apparatus of claim 14, wherein the luminance component compensator (14) comprises:

a second luminance level checker (130) which checks whether the difference between the luminance level of the single color to be represented by the color-compensated first through N$^{th}$ middle status chrominance components and the second predetermined level exists; and
a second luminance level adjuster (132) which adjusts the luminance levels of the color-compensated first through N$^{th}$ middle status chrominance components in response to the check result of the second luminance level checker.

16. The multiple color transformation apparatus of claim 15, wherein the second predetermined level corresponds to a luminance level of a color that is to be represented by the first through M$^{th}$ input chrominance components.

17. The multiple color transformation apparatus of claim 15 or 16, wherein the second predetermined level is a luminance level that is pre-determined and is desired by a user.

18. A multiple color transformation method for an image, comprising:

linearly combining first through M$^{th}$ (where M is a positive integer larger than or equal to "3") input chrominance components for representing a color of each of pixels of the image to produce (20) first through N$^{th}$ (where N is a positive integer larger than or equal to "4" and is larger than M) middle status chrominance components;
adjusting (22) luminance levels of the first through N$^{th}$ middle status chrominance components;
**characterised in that** the step of adjusting (22) luminance levels of the first through N$^{th}$ middle status chrominance components is carried out according to degrees to which the first through N$^{th}$ middle status chrominance components contribute to a single color and determining the first through N$^{th}$ middle status chrominance components having the adjusted luminance levels as color-compensated first through N$^{th}$ middle status chrominance components;
wherein the step of adjusting (22) luminance levels includes:

checking whether a luminance level of a first contribution chrominance component is lower than a first predetermined level and a luminance level of the single color is higher than the first predetermined level; and

adjusting the luminance level of the first contribution chrominance component in response to the check result of the first luminance level checker and reflects the adjustment result to adjust luminance levels of remaining contribution chrominance components,

wherein the first contribution chrominance component corresponds to one of the first through $N^{th}$ middle status chrominance components which most greatly contributes to representing the single color and the remaining contribution Chrominance components correspond to middle status chrominance components of the first through $N^{th}$ middle status chrominance components except the first contribution chrominance component.

19. The multiples color transformation method of claim 18, further comprising:

compensating (24) luminance levels of the color compensated first through $N^{th}$ middle status chrominance components by a difference between a luminance level of the single color to be represented by the color-compensated first through $N^{th}$ middle status chrominance components and a second predetermined level.

**Patentansprüche**

1. Vorrichtung zur Mehrfarbtransformation für ein Bild, umfassend:

einen Mittelstatus-Chrominanzkomponentenerzeuger (10), der erste bis M-te (wobei M eine positive ganze Zahl größer oder gleich "3" ist) eingegebene Chrominanzkomponenten zum Darstellen einer Farbe eines jeden Pixels des Bildes so linear kombiniert, dass erste bis N-te (wobei N eine positive ganze Zahl größer oder gleich "4" und größer als M ist) Mittelstatus-Chrominanzkomponenten erzeugt werden, und
einen Chrominanzkomponentenkompensator (12), der Luminanzwerte der ersten bis N-ten Mittelstatus-Chrominanzkomponenten einstellt,
**dadurch gekennzeichnet, dass** der Chrominanzkomponentenkompensator dazu ausgebildet ist, Luminanzwerte der ersten bis N-ten mittelstatus-Chrominanzkomponenten gemäß Graden, in denen die ersten bis N-ten Mittelstatus-Chrominanzkomponenten zum Darstellen einer einzelnen Farbe beitragen, einzustellen und die ersten bis N-ten Mittelstatus-Chrominanzkomponenten mit den eingestellten Luminanzwerten als farbkompensierte erste bis N-te Mittelstatus-Chrominanzkomponenten auszugeben,
wobei der Chrominanzkomponentenkompensator (12) umfasst:

einen ersten Luminanzwertprüfer (102), der prüft, ob ein Luminanzwert einer ersten beitragenden Chrominanzkomponente niedriger ist als ein erster vorgegebener Wert und ein Luminanzwert der einzelnen Farbe höher ist als der erste vorgegebene Wert,
einen ersten Luminanzwerteinsteller (104), der den Luminanzwert der ersten beitragenden Chrominanzkomponente in Abhängigkeit vom Prüfergebnis des ersten Luminanzwertprüfers einstellt und das Einstellergebnis reflektiert, um Luminanzwerte verbleibender beitragender Chrominanzkomponenten einzustellen, wobei die erste beitragende Chrominanzkomponente einer der ersten bis N-ten Mittelstatus-Chrominanzkomponenten entspricht, die am stärksten dazu beiträgt, die einzelne Farbe darzustellen, und die verbleibenden beitragenden Chrominanzkomponenten Mittelstatus-Chrominanzkomponenten der ersten bis N-ten Mittelstatus-Chrominanzkomponenten ohne die erste beitragende Chrominanzkomponente entsprechen.

2. Vorrichtung zur Mehrfarbtransformation nach Anspruch 1, wobei der Mittelstatus-Chrominanzkomponentenerzeuger (10) umfasst:

eine Koeffizientengruppenbestimmungseinrichtung (40), die mindestens eine Koeffizientengruppe bestimmt, und
einen Mittelstatus-Chrominanzkomponentengenerator (42), der die ersten bis N-ten Mittelstatus-Chrominanzkomponenten aus den ersten bis M-ten eingegebenen Chrominanzkomponenten unter Verwendung der bestimmten mindestens einen Koeffizientengruppe generiert.

3. Vorrichtung zur Mehrfarbtransformation nach Anspruch 1, wobei der Mittelstatus-Chrominanzkomponentenerzeuger (10) weiter umfasst:

einen Skalierungsbedarfprüfer (44), der prüft, ob eine Skalierung durchgeführt werden muss,

eine Skalierungsverhältnisbestimmungseinrichtung (46), die ein Skalierungsverhältnis in Abhängigkeit vom Prüfergebnis des Skalierungsbedarfprüfers bestimmt, und

eine Skalierungseinrichtung (48), die mindestens eine der ersten bis N-ten Mittelstatus-Chrominanzkomponenten unter Verwendung des bestimmten Skalierungsverhältnisses in Abhängigkeit vom Prüfergebnis des 5kalierungsbedarfprilfers skaliert.

4. Vorrichtung zur Mehrfarbtransformation nach Anspruch 3, wobei die Skalierungsverhältnisbestimmungseinrichtung (46) in Abhängigkeit vom Prüfergebnis des Skalierungsbedarfprüfers das Skalierungsverhältnis so bestimmt, dass es zu einem Grauwert der ersten bis M-ten eingegebenen Chrominanzkomponenten komplementär ist.

5. Vorrichtung zur Mehrfarbtransformation nach Anspruch 3, wobei der Mittelstatus-Chrominanzkomponentenerzeuger (10) weiter umfasst:

einen Luminanzschwellenwertprüfer (80), der prüft, ob mindestens einer der Luminanzwerte der skalierten ersten bis N-ten Mittelstatus-Chrominanzkomponenten außerhalb eines wesentlichen Luminanzschwellenwerts liegt, und

eine Luminanzschwellenwerteinstelleinrichtung (82), die in Abhängigkeit vom Prüfergebnis des Luminanzschwellenwertprüfers die Luminanzwerte der skalierten ersten bis N-ten Mittelstatus-Chrominanzkomponenten, die außerhalb des wesentlichen Luminanzschwellenwerts liegen, so einstellt, dass sie in einem Bereich des Luminanzschwellenwerts liegen.

6. Vorrichtung zur Mehrfarbtransformation nach Anspruch 1, wobei der Mittelstatus-Chrominanzkomponentenerzeuger umfasst:

einen Skalierungsbedarfprüfer (60), der prüft, ob eine Skalierung durchgeführt werden muss, und

eine Skalierungsverhältnisbestimmungseinrichtung (46), die ein Skalierungsverhältnis in Abhängigkeit vom Prüfergebnis des Skalierungsbedarfprüfers bestimmt,

wobei die Koeffizientengruppenbestimmungseinrichtung (40) die mindestens eine Koeffizientengruppe unter Verwendung des Skalierungsverhältnisses in Abhängigkeit vom Prüfergebnis des Skalierungsbedarfprüfers (60) bestimmt.

7. Vorrichtung zur Mehrfarbtransformation nach einem der vorhergehenden Ansprüche, wobei der erste vorgegebene Wert einem maximalen Luminanzwert der ersten beitragenden Chrominanzkomponente entspricht.

8. Vorrichtung zur Mehrfarbtransformation nach einem der vorhergehenden Ansprüche, wobei der Chrominanzkomponentenkompensator weiter umfasst:

einen Wertgenerator (100), der den ersten vorgegebenen Wert unter Verwendung des Luminanzwerts der ersten beitragenden Chrominanzkomponente, der Luminanz der einzelnen Farbe und einer Gewichtung generiert und den generierten ersten vorgegebenen Wert an den ersten Luminanzwertprüfer gibt,

wobei die Gewichtung einen Grad bezeichnet, zu dem jede der ersten bis N-ten Mittelstatus-Chrominanzkomponenten zum Darstellen der einzelnen Farbe beiträgt.

9. Vorrichtung zur Mehrfarbtransformation nach Anspruch 8, wobei der Wertgenerator (100) den ersten vorgegebenen Wert unter Verwendung der unten angegebenen Formel generiert:

$$X_{th} = \mathrm{Re}\,gion\frac{D_{yx}}{D_{yt}}$$

wobei $X_{th}$ den ersten vorgegebenen Wert bezeichnet, Region die Gewichtung bezeichnet, $D_{yx}$ den Luminanzwert der ersten beitragenden Chrominanzkomponente bezeichnet und $D_{yt}$ den Luminanzwert der einzelnen Farbe bezeichnet.

10. Vorrichtung zur Mehrfarbtransformation nach Anspruch 8, wobei der erste Luminanzwerteinsteller (104) die Luminanzwerte der verbleibenden beitragenden Chrominanzkomponenten gemäß Prioritäten von Graden, in denen die verbleibenden beitragenden Chrominanzkomponenten zum Darstellen der einzelnen Farbe beitragen, einstellt.

**11.** Vorrichtung zur Mehrfarbtransformation nach Anspruch 6, 7, 8, 9 oder 10, wobei der erste Luminanzwerteinsteller (104) umfasst:

einen Kompensator (110) für größere Chrominanzkomponenten, der,
wenn durch das Prüfergebnis des ersten Luminanzwertprüfers erkannt ist, dass der Luminanzwert der ersten beitragenden Chrominanzkromponente niedriger ist als der erste vorgegebene Wert und der Luminanzwert der einzelnen Farbe höher ist als der erste vorgegebene Wert,
den Luminanzwert der ersten beitragenden Chrominanzkomponente so anhebt, dass er gleich dem ersten vorgegebenen Wert ist, und Luminanzwerte der verbleibenden beitragenden Chrominanzkomponenten um den Enhebungsbetrag des Luminanzwerts der ersten beitragenden Chrominanzkomponente verringert, und
einen Kompensator (112) für kleinere Chrominanzkomponenten, der, wenn durch das Prüfergebnis des ersten Luminanzwertprüfers erkannt ist, dass der Luminanzwert der ersten beitragenden Chrominanzkomponente niedriger ist als der erste vorgegebene Wert und der Luminanzwert der einzelnen Farbe niedriger als oder gleich dem ersten vorgegebenen Wert ist, den Luminanzwert der ersten beitragenden Chrominanzkomponente so anhebt oder verringert, dass er gleich dem Luminanzwert der einzelnen Farbe ist, und die Luminanzwerte der verbleibenden beitragenden Chrominanzkomponenten um den Inkrement- oder Reduktionsbetrag des Luminanzwerts der ersten beitragenden Chrominanzkomponente verringert oder anhebt.

**12.** Vorrichtung zur Mehrfarbtransformation nach Anspruch 8, wobei, wenn der Luminanzwert der ersten beitragenden Chrominanzkomponente niedriger ist als der erste vorgegebene Wert und der Luminanzwert der einzelnen Farbe höher ist als der erste vorgegebene Wert, der Kompensator für größere Chrominanzkomponenten die Luminanzwerte der ersten und der verbleibenden beitragenden Chrominanzkomponenten unter Verwendung der unten angegebenen Formel einstellt:

$$x2 = x1 + (\max - x1)\,\mathrm{Re}\,gion$$

$$y2 = \frac{y1 - \max \times x_{th} \times \mathrm{Re}\,gion}{1 - x_{th} \times \mathrm{Re}\,gion}$$

wobei x2 den eingestellten Luminanzwert der ersten beitragenden Chrominanzkomponente bezeichnet, x1 den uneingestellten Luminanzwert der ersten beitragenden Chrominanzkomponente bezeichnet, y2 die eingestellten Luminanzwerte der verbleibenden beitragenden Chrominanzkomponenten bezeichnet, y1 die uneingestellten Luminanzwerte der verbleibenden beitragenden Chrominanzkomponenten bezeichnet, $x_{th}$ den ersten vorgegebenen Wert bezeichnet, der als

$$x_{th} = \mathrm{Re}\,gion\frac{D_{yx}}{D_{yt}}$$

ausgedrückt ist, wobei $D_{yx}$ den Luminanzwert der ersten beitragenden Chrominanzkomponente bezeichnet und $D_{yt}$ den Luminanzwert der einzelnen Farbe bezeichnet, *max* einen maximalen Luminanzwert jeder Mittelstatus-Chrominanzkomponente bezeichnet und *Region* die Gewichtung bezeichnet, die den Grad darstellt, zu dem jede der ersten bis N-ten Mittelstatus-Chrominanzkomponenten zum Darstellen der einzelnen Farbe beiträgt.

**13.** Vorrichtung zur Mehrfarbtransformation nach Anspruch 10, wobei, wenn der Luminanzwert der ersten beitragenden Chrominanzkomponente niedriger ist als der erste vorgegebene Wert und der Luminanzwert der einzelnen Farbe niedriger als oder gleich dem ersten vorgegebenen Wert ist, der Kompensator für kleinere Chrominanzkomponenten Luminanzwerte der ersten und der verbleibenden beitragenden Chrominanzkomponenten unter Verwendung der unten angegebenen Formel einstellt:

$$x2 = \frac{x1 + x1 \times (1 - x_{th}) \times \mathrm{Re}\,gion}{x_{th}}$$

$$y2 = y1 - x_{th} \times x_2 \times \mathrm{Re}\,gion$$

wobei x2 den eingestellten Luminanzwert der ersten beitragenden Chrominanzkomponente bezeichnet, x1 den uneingestellten Luminanzwert der ersten beitragenden Chrominanzkomponente bezeichnet, y2 die eingestellten Luminanzwerte der verbleibenden beitragenden Chrominanzkomponenten bezeichnet, y1 die uneingestellten Luminanzwerte der verbleibenden beitragenden Chrominanzkomponenten bezeichnet, $x_{th}$ den ersten vorgegebenen Wert bezeichnet, der als

$$X_{th} = \mathrm{Re}\,gion\frac{D_{yx}}{D_{yt}}$$

ausgedrückt ist, wobei $D_{yx}$ den Luminanzwert der ersten beitragenden Chrominanzkomponente bezeichnet und $D_{yt}$ den Luminanzwert der einzelnen Farbe bezeichnet und *Region* die Gewichtung bezeichnet, die den Grad darstellt, zu dem jede der ersten bis N-ten Mitteistatus-Chrominanzkomponenten zum Darstellen der einzelnen Farbe beiträgt.

**14.** Vorrichtung zur Mehrfarbtransformation nach einem der vorhergehenden Ansprüche, weiter umfassend:

einen Luminanzkomponentenkompensator (14), der die Luminanzwerte von farbkompensierten ersten bis N-ten Mittelstatus-Chrominanzkomponenten durch eine Differenz zwischen dem Luminanzwert der einzelnen Farbe, die von den farbkompensierten ersten bis N-ten Mittelstatus-Chrominanzkomponenten darzustellen ist, und einem zweiten vorgegebenen Wert kompensiert.

**15.** Vorrichtung zur Mehrfarbtransformation nach Anspruch 14, wobei der Luminanzkomponentenkompensator (14) umfasst:

einen zweiten Luminanzwertprüfer (130), der prüft, ob die Differenz zwischen dem Luminanzwert der einzelnen Farbe, die von den farbkompensierten ersten bis N-ten Mittelstatus-Chrominanzkomponenten darzustellen ist, und dem zweiten vorgegebenen Wert vorliegt, und
einen zweiten Luminanzwerteinsteller (132), der die Luminanzwerte der farbkompensierten ersten bis N-ten Mitteistatus-Chrominanzkomponenten in Abhängigkeit vom Prüfergebnis des zweiten Luminanzwertprüfers einstellt.

**16.** Vorrichtung zur Mehrfarbtransformation nach Anspruch 15, wobei der zweite vorgegebene Wert einem Luminanzwert einer Farbe zugeordnet ist, die von den ersten bis M-ten eingegebenen Chrominanzkomponenten darzustellen ist.

**17.** Vorrichtung zur Mehrfarbtransformation nach Anspruch 15 oder 16, wobei der zweite vorgegebene Wert ein Luminanzwert ist, der vorgegeben und von einem Benutzer gewünscht ist.

**18.** Verfahren zur Mehrfarbtransformation für ein Bild, umfassend:

lineares Kombinieren erster bis M-ter (wobei M eine positive ganze Zahl größer oder gleich "3" ist) eingegebener Chrominanzkomponenten zum Darstellen einer Farbe eines jeden Pixels des Bildes zum Erzeugen (20) erster bis N-ter (wobei N eine positive ganze Zahl größer oder gleich "4" und größer als M ist) Mittelstatus-Chrominanzkomponenten,
Einstellen (22) von Luminanzwerten der ersten bis N-ten Mittelstatus-Chrominanzkomponenten,
**dadurch gekennzeichnet, dass** der Schritt zum Einstellen (22) von Luminanzwerten der ersten bis N-ten Mittelstatus-Chrominanzkomponenten gemäß Graden, in denen die ersten bis N-ten Mitteistatus-Chrominanzkomponenten zum Darstellen einer einzelnen Farbe beitragen, augeführt wird, und Bestimmen der ersten bis N-ten Mittelstatus-Chrominanzkomponenten mit den eingestellten Luminanzwerten als farbkompensierte erste bis N-te Mittelstatus-Chrominanzkomponenten,
wobei der Schritt zum Einstellen (22) von Luminanzwerten beinhaltet:

Prüfen, ob ein Luminanzwert einer ersten beitragenden Chrominanzkomponente niedriger ist als ein erster vorgegebener Wert und ein Luminanzwert der einzelnen Farbe höher ist als der erste vorgegebene Wert, und Einstellen des Luminanzwerts der ersten beitragenden Chrominanzkomponente in Abhängigkeit vom Prüfergebnis des ersten Luminanzwertprüfers und Reflektieren des Einstellergebnisses, um Luminanzwerte verbleibender beitragender Chrominanzkomponenten einzustellen,

wobei die erste beitragende Chrominanzkomponente einer der ersten bis N-ten Mittelstatus-Chrominanzkomponenten entspricht, die am stärksten dazu beiträgt, die einzelne Farbe darzustellen, und die verbleibenden beitragenden Chrominanzkomponenten Mittelstatus-Chrominanzkomponenten den ersten bis N-ten Mittelstatus-Chrominanzkomponenten ohne die erste beitragende Chrominanzkomponente entsprechen.

**19.** Verfahren zur Mehrfarbtransformation nach Anspruch 18, weiter umfassend:

Kompensieren (24) von Luminanzwerten der farbkompensierten ersten bis N-ten Mittelstatus-Chrominanzkomponenten durch eine Different zwischen einem Luminanzwert der einzelnen Farbe, die von den farbkompensierten ersten bis N-ten Mittelstatus-Chrominanzkomponenten darzustellen ist, und einem zweiten vorgegebenen Wert.

## Revendications

**1.** Appareil de transformation de couleurs multiples d'une image, comprenant :

un producteur de composantes de chrominance d'état intermédiaire (10) qui combine linéairement la première à la $M^{ième}$ (où M est un entier positif supérieur ou égal à « 3 » composantes de chrominance d'entrée pour représenter une couleur de chacun des pixels de l'image pour produire la première à la $N^{iéme}$ (où N est un entier positif supérieur ou égal à « 4 » et est plus grand que M) composantes de chrominance d'état intermédiaire ; et
un compensateur de composantes de chrominance (12) qui ajuste les niveaux de luminance de la première à la $N^{ième}$ composantes de chrominance d'état intermédiaire ;
**caractérisé en ce que** le compensateur de composantes de chrominance est agencé pour ajuster les niveaux de luminance de la première à la $N^{ième}$ composantes de chrominance d'état intermédiaire selon des degrés auxquels la première à la $N^{iéme}$ composantes de chrominance d'état intermédiaire contribuent à représenter une couleur unique et émet en sortie la première à la $N^{ième}$ composantes de chrominance d'état intermédiaire ayant les niveaux de luminance ajustés en tant que la première à la $N^{iéme}$ composantes de chrominance d'état intermédiaire compensées en couleur ;
dans lequel le compensateur de composantes de chrominance (12) comprend :

un vérificateur de premier niveau de luminance (102) qui vérifie si un niveau de luminance d'une première composante de chrominance de contribution est inférieur à un premier niveau prédéterminé et un niveau de luminance de la couleur unique est supérieur au premier niveau prédéterminé ;
un ajusteur de premier niveau de luminance (104) qui ajuste le niveau de luminance de la première composante de chrominance de contribution en réponse au résultat de vérification du vérificateur de premier niveau de luminance et reflète le résultat d'ajustement pour ajuster les niveaux de luminance des composantes de chrominance de contribution restantes,
dans lequel la première composante de chrominance de contribution correspond à l'une de la première à la $N^{iéme}$ composantes de chrominance d'état intermédiaire qui contribue de manière la plus importante à représenter la couleur unique et les composantes de chrominance de contribution restantes correspondent aux composantes de chrominance d'état intermédiaire de la première à la $N^{ième}$ composantes de chrominance d'état intermédiaire à l'exception de la première composante de chrominance de contribution.

**2.** Appareil de transformation de couleurs multiples selon la revendication 1, dans lequel le producteur de composantes de chrominance d'état intermédiaire (10) comprend :

un déterminateur de groupe de coefficients (40) qui détermine au moins un groupe de coefficients ; et
un générateur de composantes de chrominance d'état intermédiaire (42) qui génère la première à la $N^{ième}$ composantes de chrominance d'état intermédiaire à partir de la première à la $M^{ième}$ composantes de chrominance d'entrée cn utilisant le au moins un groupe de coefficients déterminé.

**3.** Appareil de transformation de couleurs multiples selon la revendication 1, dans lequel le producteur de composantes de chrominance d'état intermédiaire (10) comprend en outre :

un vérificateur de nécessité de graduation (44) qui vérifie si une graduation doit être effectuée ;
un déterminateur de rapport de graduation (46) qui détermine un rapport de graduation en réponse au résultat de vérification du vérificateur de nécessité de graduation ; et
un graduateur (48) qui gradue au moins l'une de la première à la $N^{ième}$ composantes de chrominance d'état intermédiaire en utilisant le rapport de graduation déterminé en réponse au résultat de vérification du vérificateur de nécessité de graduation.

4. Appareil de transformation de couleurs multiples selon la revendication 3, dans lequel le déterminateur de rapport de graduation (46) détermine le rapport de graduation de sorte à être complémentaire à la leucie de la première à la $M^{iéme}$ composantes de chrominance d'entrée en réponse au résultat de vérification du vérificateur de nécessité de graduation.

5. Appareil de transformation, de couleurs multiples selon la revendication 3, dans lequel le producteur de composantes de chrominance d'état intermédiaire (10) comprend en outre :

un vérificateur de niveau de luminance seuil (80) qui vérifie si au moins l'un des niveaux de luminance de la première à la $N^{ième}$ composantes de chrominance d'état intermédiaire gradué est en dehors d'un niveau de luminance seuil substantiel ; et
un ajusteur de niveau de luminance seuil (82) qui ajuste les niveaux de luminance de la première à la $N^{ième}$ composantes de chrominance d'état intermédiaire graduées, qui sont en dehors du niveau de luminance seuil substantiel, de sorte à être dans une plage du niveau de luminance seuil, en réponse au résultat de vérification du vérificateur d'un niveau de luminance seuil.

6. Appareil de transformation de couleurs multiples selon la revendication 1, dans lequel le producteur de composantes de chrominance d'état intermédiaire comprend :

un vérificateur de nécessité de graduation (60) qui vérifie si une graduation doit être effectuée ; et
un déterminateur de rapport de graduation (46) qui détermine un rapport de graduation en réponse au résultat de vérification du vérificateur de nécessité de graduation,
dans lequel le déterminateur de groupe de coefficients (40) qui détermine le au moins un groupe de coefficients en utilisant le rapport de graduation en réponse au résultat de vérification du vérificateur de nécessité de graduation (60).

7. Appareil de transformation de couleurs multiples selon l'une quelconque des revendications précédentes, dans lequel le premier niveau prédéterminé correspond à un niveau de luminance maximal de la première composante de chrominance de contribution,

8. Appareil de transformation de couleurs multiples selon l'une quelconque des revendications précédentes, dans lequel le compensateur de composantes de chrominance comprend en outre :

un générateur de niveau (100) qui génère le premier niveau prédéterminé en utilisant le niveau de luminance de la première composante de chrominance de contribution, la luminance de la couleur unique, et un poids et émet en sortie le premier niveau prédéterminé généré vers le vérificateur de premier niveau de luminance,
dans lequel le poids désigne un degré auquel chacune de la première à la $N^{ième}$ composantes de chrominance d'état intermédiaire contribue à représenter la couleur unique.

9. Appareil de transformation de couleurs multiples selon la revendication 8, dans lequel le générateur de niveau (100) génère le premier niveau prédéterminé en utilisant l'équation ci-dessous :

$$X_{th} = \operatorname{Re} gion \frac{D_{Y_x}}{D_{Y_t}}$$

dans laquelle $X_{th}$ désigne le premier niveau prédéterminé, Region désigne le poids, $D_{Y_x}$ désigne le niveau de luminance de la première composante de chrominance de contribution, et $D_{Y_t}$ désigne le niveau de luminance de la couleur unique.

**10.** Appareil de transformation de couleurs multiples selon la revendication 8, dans lequel l'ajusteur de premier niveau de luminance (104) ajuste les niveaux de luminance des composantes de chrominance de contribution restantes selon les priorités de degrés auxquelles les composantes de chrominance de contribution restantes contribuent à représenter la couleur unique.

**11.** Appareil de transformation de couleurs multiples selon la revendication 6, 7, 8, 9 ou 10, dans lequel l'ajusteur de premier niveau de luminance (104) comprend :

un compensateur de composantes de chrominance supérieur (110) qui, si on perçoit par le résultat de vérification du vérificateur de premier niveau de luminance que le niveau de luminance de la première composante de chrominance de contribution est inférieur au premier niveau prédéterminé et que le niveau de luminance de la couleur unique est supérieur au premier niveau prédéterminé, augmente le niveau de luminance de la première composante de chrominance de contribution de sorte à être égal au premier niveau prédéterminé et réduit les niveaux de luminance des composantes de chrominance de contribution restantes de la quantité accrue du niveau de luminance de la première composante de chrominance de contribution ; et
un compensateur de composantes de chrominance inférieur (112) qui, si on perçoit par le résultat de vérification du vérificateur de premier niveau de luminance que le niveau de luminance de la première composante de chrominance de contribution est inférieur au premier niveau prédéterminé et que le niveau de luminance de la couleur unique est inférieur ou égal au premier niveau prédéterminé, augmente ou réduit le niveau de luminance de la première composante de chrominance de contribution de sorte à être égal au niveau de luminance de la couleur unique, et réduit ou augmente les niveaux de luminance des composantes de chrominance de contribution restantes de la quantité d'incrément ou de réduction du niveau de luminance de la première composante de chrominance de contribution.

**12.** Appareil de transformation de couleurs multiples selon la revendication 8, dans lequel lorsque le niveau de luminance de la première composante de chrominance de contribution est inférieur au premier niveau prédéterminé et que le niveau de luminance de la couleur unique est supérieur au premier niveau prédéterminé, le compensateur de composantes de chrominance supérieur ajuste les niveaux de luminance de la première composante de chrominance de contribution et des composantes de chrominance de contribution, restantes en utilisant l'équation ci-dessous :

$$x2 = x1 + (\max - x1)\,\mathrm{Re}\,gion$$

$$y2 = \frac{y1 - \max \times x_{th} \times \mathrm{Re}\,gion}{1 - x_{th} \times \mathrm{Re}\,gion}$$

dans laquelle $x2$ désigne le niveau de luminance ajusté de la première composante de chrominance de contribution, $x1$ désigne le niveau de luminance non ajusté de la première composante de chrominance de contribution, $y2$ désigne les niveaux de luminance ajustés des composantes dé chrominance de contribution restantes, $y1$ désigne les niveaux de luminance non ajustés des composantes de chrominance de contribution restantes, $x_{th}$, désigne le premier niveau prédéterminé qui est exprimé par $x_{th} = \mathrm{Re}\,gion\dfrac{D_{Yx}}{D_{Yt}}$ où $D_{Yx}$ désigne le niveau de luminance du premier niveau de chrominance de contribution et $D_{Yt}$ désigne le niveau de luminance de la couleur unique, max désigne un niveau de luminance maximal de chaque composante de chrominance d'état intermédiaire et Région désigne le poids qui représente le degré auquel chacune de la première à la N$^{\text{ième}}$ composantes de chrominance d'état intermédiaire contribue à représenter la couleur unique.

**13.** Appareil de transformation de couleurs multiples selon la revendication 10, dans lequel lorsque le niveau de luminance de la première composante de chrominance de contribution est inférieur au premier niveau prédéterminé et que le niveau de luminance de la couleur unique est inférieur ou égal au premier niveau prédéterminé, le compensateur de composantes de chrominance inférieur ajuste les niveaux de luminance de la première composante de chrominance de contribution et des composantes de chrominance de contribution restantes en utilisant l'équation ci-dessous :

$$x2 = \frac{x1 + x1 \times (1 - x_{th}) \times \mathrm{Re}\,gion}{x_{th}}$$

$$y2 = y1 - x_{th} \times x_2 \times \mathrm{Re}\,gion$$

dans laquelle x2 désigne le niveau de luminance ajusté de la première composante de chrominance de contribution, x1 désigne le niveau de luminance non ajusté de la première composante de chrominance de contribution, y2 désigne les niveaux de luminance ajustés des composantes de chrominance de contribution restantes, y1 désigne les niveaux de luminance non ajustés des composantes de chrominance de contribution restantes, $x_{th}$ désigne le

premier niveau prédéterminé qui est exprimé par $x_{th} = \mathrm{Re}\,gion \dfrac{D_{Yx}}{D_{Yt}}$ où $D_{Yx}$ désigne le niveau de luminance de la première composante de chrominance de contribution et $D_{Yt}$ désigne le niveau de luminance de la couleur unique, et Region désigne le poids qui représente le degré auquel chacune de la première à la N$^{ième}$ composantes de chrominance d'état intermédiaire contribue à représenter la couleur unique.

14. Appareil de transformation de couleurs multiples selon l'une quelconque des revendications précédentes, comprenant en outre :

un compensateur de composantes de luminance (14) qui compense les niveaux de luminance de la première à la N$^{iéme}$ composantes de chrominance d'état intermédiaire compensées en couleur par une différence entre le niveau de luminance de la couleur unique à représenter par la première à la N$^{ième}$ composantes de chrominance d'état intermédiaire compensées en couleur et un second niveau prédéterminé.

15. Appareil de transformation de couleurs multiplies selon la revendication 14, dans lequel le compensateur de composantes de luminance (14) comprend ;

un vérificateur de second niveau de luminance (130) qui vérifie si la différence entre le niveau de luminance de la couleur unique à représenter par la première à la N$^{ième}$ composantes de chrominance d'état intermédiaire compensées en couleur et le second niveau prédéterminé existe ; et
un ajusteur de second niveau de luminance (132) qui ajuste les niveaux de luminance de la première à la N$^{ième}$ composantes de chrominance d'état intermédiaire compensées en couleur en réponse au résultat de vérification du vérificateur de second niveau de luminance.

16. Appareil de transformation de couleurs multiples selon la revendication 15, dans lequel le second niveau prédéterminé correspond à un niveau de luminance d'une couleur qui doit être représenté par la première à la M$^{ième}$ composantes de chrominance d'entrée.

17. Appareil de transformation de couleurs multiples selon la revendication 15 ou 16, dans lequel le second niveau prédéterminé est un niveau de luminance qui est prédéterminé et est souhaité par un utilisateur.

18. Procédé de transformation de couleurs multiples d'une image, comprenant :

la combinaison linéaire de la première à la M$^{iéme}$ (ou M est un entier positif supérieur ou égal à « 3 » composantes de chrominance d'entrée pour représenter une couleur de chacun des pixels de l'image pour produire (20) la première à la N$^{iéme}$ (où N est un entier positif supérieur ou égal à « 4 » et est plus grand que M) composantes de chrominance d'état intermédiaire ;
l'ajustement (22) des niveaux de luminance de la première à la N$^{ième}$ composantes de chrominance d'état intermédiaire ;
**caractérisé en ce que** l'étape d'ajustement (22) des niveaux de luminance de la première à la N$^{ième}$ composantes de chrominance d'état intermédiaire est réalisée selon les degrés auxquels la première à la N$^{iéme}$ composantes de chrominance d'état intermédiaire contribuent à une couleur unique et la détermination de la première à la N$^{ième}$ composantes de chrominance d'état intermédiaire ayant les niveaux de luminance ajustés en tant que la première à la N$^{ième}$ composantes de chrominance d'état intermédiaire compensées en couleur ;

dans lequel l'étape d'ajustement (22) des niveaux de luminance comprend :

le fait de vérifier si un niveau de luminance d'une première composante de chrominance de contribution est inférieur à un premier niveau prédéterminé et si un niveau de luminance de la couleur unique est supérieur au premier niveau prédéterminé ; et

l'ajustement du niveau de luminance de la première composante de chrominance de contribution en réponse au résultat de vérification du vérificateur de premier niveau de luminance et le reflet du résultat d'ajustement pour ajuster les niveaux de luminance des composantes de chrominance de contribution restantes,

dans lequel la première composante de chrominance de contribution correspond à l'une de la première à la $N^{ième}$ composantes de chrominance de l'état intermédiaire qui contribuent de manière la plus importante à représenter la couleur unique et les composantes de chrominance de contribution restantes correspondent aux composantes de chrominance d'état intermédiaire de la première à la $N^{ième}$ composantes de chrominance d'état intermédiaire à l'exception de la première composante de chrominance de contribution.

**19.** Procédé de transformation de couleurs multiples selon la revendication 18, comprenant en outre :

la compensation (24) des niveaux de luminance de la première à la $N^{ième}$ composantes de chrominance d'état intermédiaire compensées en couleur par une différence entre un niveau de luminance de la couleur unique à représenter par la première à la $N^{ième}$ composantes de chrominance d'état intermédiaire compensées en couleur et un second niveau prédéterminé.

# FIG. 1 (PRIOR ART)

# FIG. 2 (PRIOR ART)

# FIG. 3 (PRIOR ART)

Green

Cyan

Yellow

White

Blue

Red

Magenta

# FIG. 4

10

12

14

IN1 → | MIDDLE STATUS CHROMINANCE COMPONENT PRODUCER | → | CHROMINANCE COMPONENT COMPENSATOR | → | LUMINANCE COMPONENT COMPENSATOR | → OUT1

# FIG. 5

```
        ┌──────────┐
        │  START   │
        └────┬─────┘
             ▼
┌───────────────────────────────────────┐
│ PRODUCE FIRST THROUGH Nth MIDDLE STATUS│──20
│    CHROMINANCE COMPONENTS              │
└───────────────────┬───────────────────┘
                    ▼
┌───────────────────────────────────────┐
│     RELATIVELY DIFFERENTLY ADJUST      │
│  LUMINANCE LEVELS OF FIRST THROUGH Nth │──22
│ MIDDLE STATUS CHROMINANCE COMPONENTS   │
└───────────────────┬───────────────────┘
                    ▼
┌───────────────────────────────────────┐
│  COMPENSATE LUMINACE LEVELS OF COLOR   │
│   -COMPENSATED FIRST THROUGH Nth       │──24
│ MIDDLE STATUS CHROMINANCE COMPONENTS   │
└───────────────────┬───────────────────┘
                    ▼
        ┌──────────┐
        │   END    │
        └──────────┘
```

# FIG. 6

```
        40                      42                  10A
┌──────────────┐      ┌──────────────────┐
│ COEFFICIENT  │      │ MIDDLE STATUS    │
│   GROUP      │─────▶│  CHROMINANCE     │
│ DETERMINER   │      │  COMPONENT       │────▶ OUT2
│              │      │  GENERATOR       │
└──────────────┘      └──────────────────┘

IN2 ─────────────────────────────┐
                                 │
        44                  ┌──────────────┐
┌──────────────┐            │   SCALER     │────▶ OUT3
│   SCALING    │            │              │
│  NECESSITY   │            └──────────────┘──48
│  CHECKER     │
└──────────────┘            ┌──────────────┐
                            │   SCALING    │
                            │   RATIO      │──46
                            │ DETERMINER   │
                            └──────────────┘
```

# FIG. 7

# FIG. 8

# FIG. 9

IN4 → **THRESHOLD LUMINANCE LEVEL CHECKER** (80) → **THRESHOLD LUMINANCE LEVEL ADJUSTER** (82) → OUT5

# FIG. 10

12A

IN5, IN7, IN6, IN8

- **LEVEL GENERATOR** (100)
- **FIRST LUMINANCE LEVEL CHECKER** (102)
- **GREATER CHROMINANCE COMPONENT COMPENSATOR** (104) → OUT6
- **SMALLER CHROMINANCE COMPONENT COMPENSATOR** (112) → OUT7

110

# FIG. 11

14A

IN9 → **SECOND LUMINANCE LEVEL CHECKER** (130) → **SECOND LUMINANCE LEVEL ADJUSTER** (132) → OUT8

**EP 1 592 261 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6633302 B
- WO 02101644 A
- JP 6261332 A
- EP 613309 A